# EUROPÄISCHE PATENTANMELDUNG

(11) **EP 0 530 138 A1**
(43) Veröffentlichungstag der Anmeldung: **03.03.1993**
(21) Anmeldenummer: 92810567.5
(22) Anmeldetag: 23.07.1992
(51) Int. Cl.: B21F 27/20, B25J 9/18

(54) **Verfahren und Vorrichtung zur Herstellung von Bewehrungen**

(30) Priorität: 23.08.1991 CH 2484/91
(71) Anmelder: MTF DATENTECHNIK AG, CH-5432 Neuenhof (CH)
(72) Erfinder: Zysset, Ernst, CH-4852 Rothrist (CH); Theil, Fritz, CH-4600 Olten (CH)
(74) Vertreter: Frauenknecht, Alois J.

(57) **Zusammenfassung**

Bei der Herstellung von Armierungen für Bauzwecke werden vorwiegend von Hand bediente Automaten eingesetzt, von welchen die entsprechenden Bügel abgenommen und manuell geprüft und zusammengebunden werden.

Ein Verfahren unter Einbezug eines Roboters (5) detektiert und selektiert die fabrizierten Bügel einzeln auf einer Erkennungsplatte (8) mittels wenigstens einer Videokamera (2) und vergleicht die gemessenen Werte in einem Rechner (12a).

Eine bevorzugte Vorrichtung sieht zusätzlich eine drehbare Aufnahmevorrichtung (10, 11, 13) vor, welche zum Bündeln (24) und Etikettieren der geprüften Bügel (1′) dient.

Der Erfindungsgegenstand vermindert das Unfallrisiko bei der Herstellung von Bewehrungen und dient der Leistungssteigerung von Biegeautomaten.

## Beschreibung

Die vorliegende Erfindung bezieht sich auf ein Verfahren zur Herstellung von Bewehrungen für Bauzwecke mittels einer rechnergesteuerten Biegemaschine sowie auf eine Vorrichtung zur Herstellung von entsprechenden Bewehrungen.

Seit einigen Jahren stehen zur Herstellung von geformten Bewehrungen (Armierungen) Biegemaschinen oder Biegeautomaten im praktischen Einsatz. Aufgrund der sehr unterschiedlichen Abmessungen und Formen dieser Bewehrungen stellt sich das Problem ihrer gefahrenfreien Manipulation. Es wurde versucht Roboter einzusetzen, welche die Bewehrung von der Biegemaschine abnehmen und zum Bündeln weitertransportieren. Es hat sich jedoch gezeigt, dass diese Roboter einerseits beim Abschneidevorgang des Baustahls vom Rollenmaterial (Coil) mechanisch sehr beansprucht werden und dass andererseits der Angriffspunkt des Roboters jeweils abhängig von der Länge und der Form des Bügels nur zufällig richtig gewählt wird. Ein falsch gewählter Angriffspunkt kann zu Kollisionen mit der Biegemaschine und/oder dem Bedienungspersonal führen, aber auch ein Herauskippen oder sogar ein Verformen der Bewehrung bewirken.

Es ist Aufgabe der vorliegenden Erfindung, in der Herstellung von vorgefertigten Bewehrungen einen sicheren und wirtschaftlichen Materialfluss zu erzielen und gleichzeitig die Qualität und die Produktionsleistung der Herstellung von Bewehrungen anzuheben. Der Erfindungsgegenstand soll auch bei variierender Qualität des Baustahls, ungeachtet von dessen Elastizitätsverhalten gleichbleibende Bewehrungen, insbesondere Biegeradien, gewährleisten. Ebenfalls soll die Standzeit der entsprechenden Vorrichtung hoch sein, bzw. es soll ein möglichst geringer Verschleiss erfolgen und nur eine minimale Wartung der Vorrichtung erforderlich sein.

Diese Aufgabe wird verfahrensgemäss dadurch gelöst, dass die von der Biegemaschine gebogenen Bewehrungen von dieser entfernt und auf eine Erkennungsplatte verbracht werden, dass die Bewehrungen einzeln, visuell ausgemessen, in ihrer Konfiguration detektiert, erkannt und bewertet werden, dass durch einen Roboter diese Bewehrungen im Bereich ihres Massenschwerpunktes gefasst und entsprechend ihrer Bewertung zur Weiterverarbeitung und/oder Bündelung oder zur Nachbearbeitung verbracht werden.

Die Vorrichtung ist gekennzeichnet, dass vertikal zu einer Erkennungssplatte wenigstens eine Videokamera angeordnet ist, welche mit einer Bilderkennungsvorrichtung und einem Rechner mit gespeicherten Sollwerten für die Bilderkennung verbunden ist, und dass die Erkennungsplatte durch wenigstens eine durch den Rechner gesteuerte Greifvorrichtung abfahrbar ist.

In nachfolgenden abhängigen Ansprüchen sind vorteilhafte Weiterbildungen des Erfindungsgegenstandes charakterisiert.

Das Verfahren nach Anspruch 2 sieht üblicherweise eine Videokamera über der Erkennungsplatte vor, welche aber bei einer transparenten oder halbtransparenten Platte ebenfalls unter dieser angeordnet sein kann.

Das Ausrichten einer weiteren Videokamera, gemäss Anspruch 3, erleichtert die Bildverarbeitung und reduziert damit den resultierenden EDV-Aufwand. Es erlaubt vor allem auch die sichere Detektion von winkligen Bewehrungen.

Die Ausgestaltung nach Anspruch 4 reduziert die Unfallgefahr am Arbeitsplatz und dient gleichzeitig der optimalen Ausnutzung der Betriebsmittel, insbesondere des Roboters.

Der in Anspruch 6 erwähnte Portalroboter, auch hängender Roboter genannt, ist vor allem bei langen bzw. flächenmässig ausgedehnten Bewehrungen vorteilhaft.

Der Einsatz des Freiarm-Roboters nach Anspruch 7 ist insbesondere bei der Herstellung von kürzeren Bewehrungen, sogenannten Bügeln, empfehlenswert.

Die Ausgestaltung nach Anspruch 8 ergibt hohe Kontrastwerte und liefert damit gut auswertbare Videosignale an die Bilderkennungsvorrichtung.

Die Zwischenschaltung eines Transportbandes, Anspruch 9, dient einerseits dem Materialtransport, erlaubt aber andererseits eine gewisse Material-Pufferung bei unterschiedlichen Fertigungszyklen der Biegemaschinen.

Die Ausführung der Aufnahmevorrichtung nach Anspruch 10 dient ebenfalls der Produktionssteigerung und begünstigt den Materialfluss.

Je nach Grösse der Bewehrungen können die Aufnahmevorrichtungen als Polygone ausgestaltet werden, vgl. Anspruch 11, wodurch sich die Materialflüsse zusätzlich optimieren lassen.

Zum versandfertigen Binden und Etikettieren der Bewehrungen eignet sich insbesondere ein einfacher Freiarm-Roboter, Anspruch 12.

Nachfolgend werden anhand von Zeichnungen Ausführungsbeispiele des Erfindungsgegenstandes näher beschrieben.

Es zeigen:
Fig. 1 eine Anlage zur Herstellung von Bewehrungen in einer Frontalansicht,
Fig. 2 die Anlage Fig. 1 in einer Ansicht von oben,
Fig. 3 einen Drehtisch mit Aufnahmevorrichtungen für die Bündelung der geprüften Bewehrungen,
Fig. 4 einen Freiarm-Roboter im Zugriff auf eine detektierte Bewehrung und
Fig. 5 Einzelheiten des Greifers am Roboter Fig. 1.

Für gleiche Funktionsteile wurden gleiche Bezugsziffern gewählt.

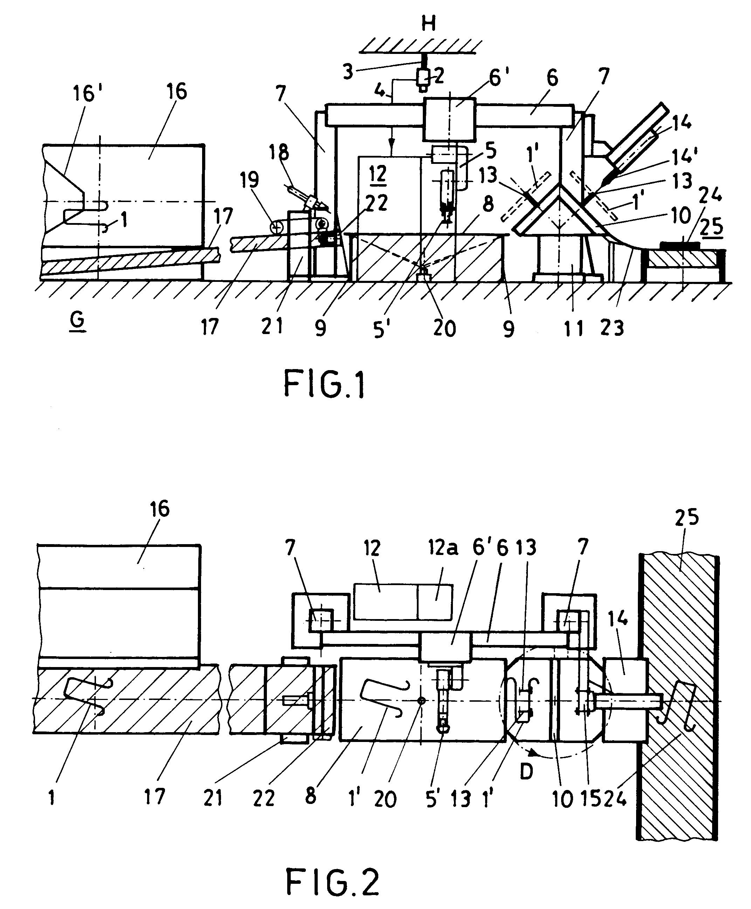

In Fig. 1 ist eine Bewehrung, ein sogenannter Bügel, mit 1 bezeichnet, der von einer Biegemaschine 16 über deren Auswurfvorrichtung 16′ auf ein Transportband 17 geworfen wird. Das Transportband 17 befördert die in bekannter Weise hergestellten Bügel 1 unter einem bandförmigen Niederhalter-Förderer 19 und unter einem Joch-Ständer 21 hindurch, wonach sie durch eine Schiebevorrichtung 18 jeweils einen mechanischen Impuls erfahren und über eine Rutsche 22 auf eine Erkennungsplatte 8 befördert werden, vgl. Fig. 2.

Die Erkennungsplatte 8 ruht auf einem tischartig ausgestalteten Träger 9, über welchem das Portal 6 mit Laufkatze 6′ an zwei Ständern 7 angeordnet ist. An der Laufkatze 6′ hängt ein sechsachsiger Roboter 5 mit Greifer 5′ zur Aufnahme und zur Weiterbeförderung der detektierten Bügel 1′. Die Detektion der Bügel 1 erfolgt mittels einer an der Hallendecke H angeordneten Videokamera 2 mit zentraler Optik an einem einstellbaren Stativ 3. Die generierten Signale werden über eine Videosignalleitung 4 einem Steuerschrank mit Rechner 12 mit einer daneben angeordneten Bilderkennungsvorrichtung 12a, mit eingebautem, nicht dargestelltem Monitor, zugeführt.

Alternativ oder ergänzend, je nach verwendeter Bilderkennungsmethode, ist eine weitere Videokamera 20 vorgesehen, entweder wie in Fig. 1 und 2 dargestellt unter der Erkennungsplatte oder in einer anderen Lage in Ergänzung zur Videokamera 2.

Der Roboter 5 greift die detektierten Bewehrungen 1′ im Bereich ihres Massenschwerpunktes und befördert sie auf eine Aufnahmevorrichtung, bestehend aus einem Drehtisch 10, einem Maschinenständer 11 und zwei Stapelklauen 13; vgl. auch Fig. 2.

In den Stapelklauen 13 werden jeweils gleichartige Bewehrungen 1′ in der jeweils vorgewählten, transportgünstigen Anzahl gestapelt, in Richtung D um 180° weggedreht und in der neuen Lage mittels eines dreiachsigen Roboters 14 mit Runddraht zusammengebunden und mittels vorgedruckten Etiketten versehen. Diese Arbeit erfolgt durch einen handelsüblichen Greifer 14′. Dieser Roboter 14 ist über einen Support 15 mit dem Ständer 7 am Portal 6 befestigt.

Die Stapelklauen 13 sind im Drehtisch 10 versenkbar angeordnet und werden jeweils bei einem zusammengebundenen Bündel 24 zurückgezogen, sodass dieses über eine Rutsche 23 zum Abtransport auf einen Plattenbandförderer 25 gleitet.

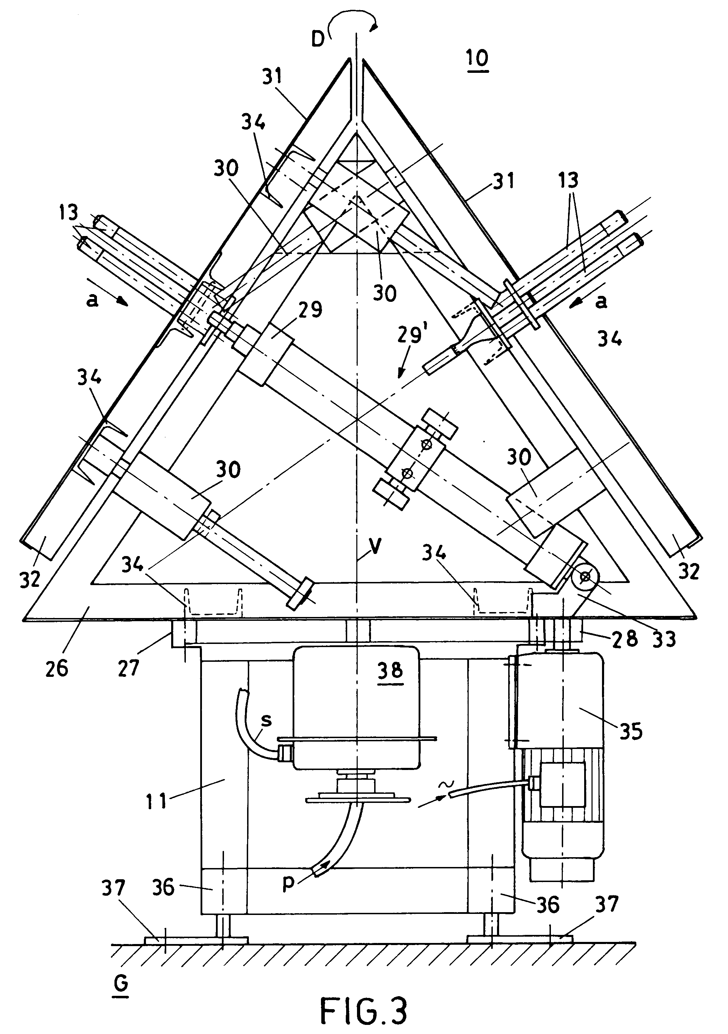

Einzelheiten der Aufnahmevorrichtung bzw. des Drehtisches 10 sind in der Fig. 3 dargestellt; ein Drehrahmen 26, auf einem Stirnzahnrad 27 aufgebaut, ist über ein Ritzel 28 durch einen Getriebemotor 35 um jeweils 180° um die Vertikalachse V schwenkbar angeordnet. In dem durch U-Profile 34 verstärkten Drehrahmen 26 befinden sich Montagesäulen 30, auf welchem über Holzauflagen 32 Verschleissplatten 31 befestigt sind. In diesen Verschleissplatten 31 befinden sich zentrale Ausnehmungen, aus welchen versenkbare Stapelklauen 13 ragen, welche durch pneumatisch angetriebene Hubzylinder 29 und (angedeutet) 29′ in Richtung a versenkbar sind. Die Hubzylinder 29 bzw. 29′ sind endseitig jeweils durch Gelenkstützen 33 am Drehrahmen 26 befestigt.

Der Drehrahmen 26 ruht auf einem massiven Maschinenständer 11 mit Gummilagern 36 und flanschartigen Aufliegern 37, welche im Hallenboden G verankert sind. Im Ständer 11 befindet sich eine handelsübliche 16-polige Schleifring/Drehkupplung 38 zur Übertragung von Steuersignalen s und der notwendigen Pressluftzufuhr p zum Drehrahmen 26.

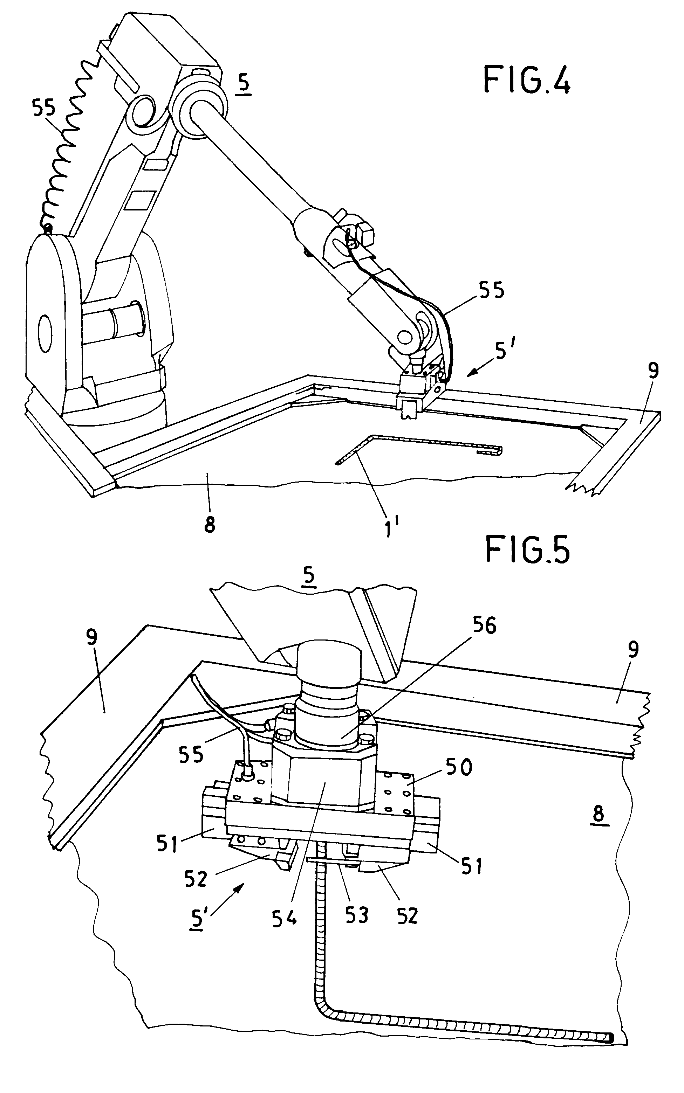

In einem bevorzugten Ausführungsbeispiel, Fig. 4, ist der Portalroboter durch einen Freiarm-Roboter 5 ersetzt. Die pneumatische und elektrische Ansteuerung des Greifers 5′ erfolgt über bewegliche Steuerleitungen 55.

Der Greifer 5′, Fig. 5, ist am Roboter über eine Greiferachse 56, ein Flanschteil 54 mit einer Greifergrundplatte 50 verbunden. An dieser Greifergrundplatte 50 ist eine Schwalbenschwanzführung 51 befestigt, auf welcher zwei zentral ausrückbare Wangenblöcke 52 gleitgeführt sind. Ein Zentrierstift 53 gewährleistet auch bei einem intensiven Betrieb ein sicheres Fassen der Bügel 1′.

Ein besonderer Vorteil der vorgängig dargestellten Anlage besteht darin, dass Biegemaschinen, sogenannte Biegeautomaten, beliebiger Marken einsetzbar sind.

Das Greifersystem erfasst die Bewehrungen erst nach dem Verlassen des Automaten momentenfrei bzw. ohne Schläge aufnehmen zu müssen und ermöglicht zudem die Zwischenstapelung (Pufferung) der fabrizierten Bewehrungen.

Die erfindungsgemässe Vorrichtung kann somit auf bestehenden Infrastrukturen aufgebaut werden. Sämtliche verwendeten Komponenten, insbesondere der bevorzugte Freiarm-Roboter, sind handelsüblich (ABB, ASEA Brown Boveri AG; ASEA Typ 320).

Die Detektion der Bügel auf der Erkennungsplatte setzt eine Speicherung der Vorgabedaten sowie der Grenzdaten der herzustellenden Bügel voraus und basiert auf den an sich bekannten Methoden der Bilderkennung.

Die Vorgabedaten können einem üblichen CAD-System entnommen werden, ebenso die Produktionsdaten einem an sich bekannten PPS-System. Die Bildauswertung mit der Erfassung der entsprechenden spezifischen Formdaten auf der Erkennungsplatte erfolgt mittels handelsüblichen Videokameras und wird auf ordinären Personalcomputern ausgewertet. Ebenso erfolgt die Roboterprogrammierung und Steuerung entsprechend dem Bekannten. Die Berechnung des spezifischen Greifpunktes an einem Bügel erfolgt aus einer Summierung aller um jeweils eine Schenkelachse wirkenden Momente. Dabei wird das kleinste Gesamtmoment berechnet und auf diesem Schenkel das wiederum kleinste Moment quer zur Achse. Durch eine Annäherung des Greifers auf eine minimale Greifpunktdistanz genügt zum Transport ein einfaches Zusammenführen der Wangenblöcke ohne weitere Hilfsmassnahmen.

Die Leistung eines Prototypen entsprach dem Dreifachen einer bisherigen manuell betätigten Anlage. Bügel mit einer von den zulässigen Vorgabedaten abweichenden Konfiguration wurden jeweils umgehend erfasst und ausgesondert, sodass Änderungen in der Materialqualität (Nachfederverhalten des Bügels) bereits während der Produktion berücksichtigt werden konnten. Besonders vorteilhaft erwies sich hierbei die Eliminierung der Unfallgefahr und auch des Verschleisses der Gelenke von Arbeitern, denen bisher die monotone und schwere Arbeit der Bedienung von Biegemaschinen und des Abtransports von Bügeln oblag. - Ebenfalls wurden Korrekturdaten von Bügeln erfasst und diese zusammen mit fehlerhaften Bügeln an die Biegemaschine zur Nachbearbeitung zurückgeführt.

Der Erfindungsgegenstand lässt sich auf eine vollautomatische und damit völlig gefahrlose Herstellung von Bewehrungen ausbauen.

## Patentansprüche

1. Verfahren zur Herstellung von Bewehrungen für Bauzwecke mittels einer rechnergesteuerten Biegemaschine, dadurch gekennzeichnet, dass die von der Biegemaschine gebogenen Bewehrungen von dieser entfernt und auf eine Erkennungsplatte verbracht werden, dass die Bewehrungen einzeln, visuell ausgemessen, in ihrer Konfiguration detektiert, erkannt und bewertet werden, dass durch einen Roboter diese Bewehrungen im Bereich ihres Massenschwerpunktes gefasst und entsprechend ihrer Bewertung zur Weiterverarbeitung und/oder Bündelung oder zur Nachbearbeitung verbracht werden.

2. Verfahren nach Anspruch 1, dadurch gekennzeichnet, dass die wenigstens eine Videokamera in lotrechter Lage auf die Erkennungsplatte ausgerichtet wird.

3. Verfahren nach Anspruch 2, dadurch gekennzeichnet, dass wenigstens eine Videokamera in lotrechter Lage auf die Erkennungsplatte ausgerichtet wird, und dass eine weitere Videokamera in horizontaler Lage über dieser Erkennungsplatte ausgerichtet wird, welche die Erkennungsplatte überragende Teile detektiert.

4. Verfahren nach wenigstens einem der vorangehenden Ansprüche, dadurch gekennzeichnet, dass die Bewehrungen einzeln zur Bündelung auf eine greiferartig ausgebildete Aufnahme verbracht werden und dass diese Aufnahme wenigstens in einer Achse schwenkbar ausgebildet ist, derart, dass sie die Bewehrungen aus dem Arbeitsbereich des Roboters verschwenkt, wo sie zum Binden, Etikettieren und zum Transport bereitstehen.

5. Vorrichtung zur Herstellung von Bewehrungen für Bauzwecke mittels einer rechnergesteuerten Biegemaschine, dadurch gekennzeichnet, dass vertikal zu einer Erkennungssplatte (8) wenigstens eine Videokamera (2) angeordnet ist, welche mit einer Bilderkennungsvorrichtung (12a) und einem Rechner mit gespeicherten Sollwerten für die Bilderkennung verbunden ist, und dass die Erkennungsplatte (8) durch wenigstens eine durch den Rechner (12) gesteuerte Greifvorrichtung (5, 5′) abfahrbar ist. (Fig. 1, 2)

6. Vorrichtung nach Anspruch 5, dadurch gekennzeichnet, dass die Greifvorrichtung (5, 5′) ein Portalroboter ist. (Fig. 1)

7. Vorrichtung nach Anspruch 5, dadurch gekennzeichnet, dass die Greifvorrichtung (5, 5′) ein sechsachsiger Freiarm-Roboter ist. (Fig. 4)

8. Vorrichtung nach Anspruch 5, dass die Erkennungsplatte (8) als Tisch ausgebildet ist und dass diese eine mattschwarze, horizontale Erkennungsfläche aufweist, welche zumindest die grösste herzustellende Bewehrung in ihrer grössten Flächenausdehnung aufnimmt. (Fig. 2, 4)

9. Vorrichtung nach Anspruch 5, dadurch gekennzeichnet, dass zwischen der Biegemaschine (16) und der Erkennungsplatte (8) ein Transportband (17) zwischengeschaltet ist. (Fig. 1, 2)

10. Vorrichtung nach Anspruch 6, dadurch gekennzeichnet, dass wenigstens eine, um eine vertikale Achse (V) drehbare schiefe Ebene (31) auf einem Drehtisch (10) mit greiferartigen, versenkbar ausgestalteten Stapelklauen (13), vorgesehen ist. (Fig. 3)

11. Vorrichtung nach Anspruch 10, dadurch gekennzeichnet, dass n Aufnahmevorrichtungen (10;13) vorgesehen sind, welche in n zueinander geneigten, drehbaren schiefen Ebenen (31) angeordnet sind. (Fig. 3)

12. Vorrichtung nach einem der Ansprüche 9 bis 11, dadurch gekennzeichnet, dass der Aufnahmevorrichtung (10,11,13) ein weiterer Roboter (14) zugeordnet ist, welcher dem Binden und Etikettieren der Bewehrungen (1˝) dient.
